# EUROPÄISCHE PATENTSCHRIFT

(11) **EP 0 877 693 B1**
(45) Veröffentlichungstag und Bekanntmachung des Hinweises auf die Patenterteilung: **07.05.2003**
(21) Anmeldenummer: 97903232.3
(22) Anmeldetag: 10.02.1997
(51) Int. Cl.: B60T 17/16, B60T 11/10, B60R 25/08

(54) **KOMBINIERTE BETRIEBS- UND FESTSTELLBREMSANLAGE**
COMBINED SERVICE AND PARKING BRAKE SYSTEM
SYSTEME COMBINE DE FREIN DE SERVICE ET DE FREIN DE STATIONNEMENT

(30) Priorität: 09.02.1996 DE 19604669; 21.05.1996 DE 19620344
(43) Veröffentlichungstag der Anmeldung: 18.11.1998
(73) Patentinhaber: Continental Teves AG & Co. oHG, 60488 Frankfurt (DE)
(72) Erfinder: HALASY-WIMMER, Georg, D-71706 Markgröningen (DE); BALZ, Jürgen, D-65510 Hünstetten (DE); SCHMITT, Stefan, D-65343 Eltville (DE); NEUMANN, Ulrich, D-64380 Ro dorf (DE); FEIGEL, Hans-Jörg, D-61191 Rosbach (DE); SCHIEL, Lothar, D-65719 Hofheim (DE); KLEIN, Andreas, D-61350 Bad Homburg (DE)
(86) Internationale Anmeldenummer: EP9700554
(87) Internationale Veröffentlichungsnummer: WO97029292

(56) Entgegenhaltungen:
- EP-A- 0 023 468
- EP-A- 0 504 965
- WO-A-92/05993
- WO-A-92/20937
- DE-A- 4 205 590
- DE-C- 820 699
- US-A- 2 235 412
- US-A- 3 482 666

## Beschreibung

Die Erfindung betrifft eine hydraulisch zuspannende, kombinierte Betriebs- und Feststellbremsanlage, insbesondere für Kraftfahrzeuge, gemäß dem Oberbegriff des Patentanspruchs 1.

Eine derartige kombinierte Betriebs- und Feststellbremsanlage ist aus der deutschen Patentanmeldung DE 195 02 927.5 bekannt. Bei dieser Bremse erfolgt die Zuspannung der Bremse in beiden Betriebsarten (Betriebsmodus und Feststellmodus) hydraulisch, wobei bei Feststellbremsung die Bremse mit einem Druckstoß, der oberhalb des Betriebsdruckes liegt, verriegelt wird. Auch für den Lösevorgang der Feststellbremse ist ein Druckstoß, der von einer Fremdenergiequelle aufgebracht wird, erforderlich. Diese Druckstöße oberhalb des Betriebsbremsdruckbereiches führen zu einer Beeinträchtigung der Lüftfunktion des Bremskolbendichtringes. Durch den hohen Druck wird die Bremszange so weit gedehnt, daß zwischen Dichtring und Bremskolben beim Zuspannen eine relative Bewegung stattfindet. Bedingt durch diesen Schlupf kann der Dichtring den Bremskolben im entlasteten und entriegelten Zustand der Bremse nicht in die ursprüngliche Position zurückschieben. Es entstehen dabei nachteilige Restmomente. Ein weiterer Nachteil der Verriegelung und des Lösens der Feststellbremse mittels Druckstößen deutlich oberhalb des Betriebsbremsdruckbereiches liegt in der zusätzlichen Schädigung der Bremse durch diese Druckstöße. Die zusätzliche Schädigung ist umso größer, je flacher die Neigung der Wöhler-Linie ist. Dies führt dazu, daß die Auslegungsdauer nicht mit der geforderten Sicherheit erreicht wird oder aber die Bremse deutlich verstärkt werden muß (Gewichtszunahme).

Es sind auch kombinierte Betriebs- und Feststellbremsen bekannt, bei denen für Betriebsbremsungen eine hydraulische Betätigungsvorrichtung und als Feststellbremse mechanisch betätigte Feststellvorrichtungen vorgesehen sind. Diese Anordnungen haben aber den Nachteil, daß neben der hydraulischen Zuleitung für jede Bremse noch ein zusätzliches Bremsseil vorgesehen werden muß. Hier ergibt sich ein erhöhter Material- und Fertigungsaufwand. Darüber hinaus kann das Bremsseil erst nach dem Einbau der Bremse am Fahrzeug montiert werden. Diese Montage liegt üblicherweise nicht im Bereich eines besonders sachkundigen Bremsenherstellers, sondern wird im allgemeinen vom Automobilhersteller durchgeführt. Der Automobilhersteller hat hier neben dem Nachteil eines erhöhten Montageaufwandes zusätzlich das Risiko einer Fehlmontage zu tragen.

Weiterhin ist aus der deutschen Offenlegungsschrift DE 42 05 590 A1 eine Bremsanlage bekannt, bei der eine Betriebsbremsung hydraulisch erfolgt und eine Feststellbremsung durch eine elektromotorische Stelleinheit unterstützt wird. Eine solche elektromotorische Stelleinheit, die unmittelbar auf die Stellung des Bremspedales einwirkt, entlastet zwar den Fahrer hinsichtlich des bei einer Feststellbremsung aufzubringenden Kraftaufwandes, ist jedoch mit einem zusätzlichen baulichen Aufwand verbunden. Daraus resultiert auch ein zusätzlicher kostenspezifischer Aufwand.

Der WO-A-92-05993 ist eine Feststellbremse mit einer Trommelbremse zu entnehmen, bei der die Trommelbremse während einer Feststellbremsung mittels elektrischer Betätigung im zugespannten Zustand verriegelt werden kann. Dazu ist eine elektrisch betätigbare Verriegelungsvorrichtung vorgesehen, die die Bremsbacken der Trommelbremse im zugespannten Zustand, d. h. in Reibanlage mit einer zugehörigen Bremstrommel, fixiert. Dabei wird als nachteilig empfunden, dass die Verriegelungsvorrichtung als eigenständige Baugruppe unabhängig von den sonstigen Betätigungselementen der Trommelbremse einen unnötig hohen Bauteil- sowie Bauraumaufwand erfordert. Darüber hinaus ist die Feststellbremse mit Verriegelungsvorrichtung auf Ausführungsformen mit kombinierten Trommelbremsen beschränkt.

Es ist daher Aufgabe der Erfindung, eine kombinierte Betriebs- und Feststellbremsanlage, ausgehend von einer Bremsanlage gemäß dem Oberbegriff des Patentanspruchs 1, dahingehend zu verbessern, daß die Feststellbremsfunktion einfach und kostengünstig realisiert wird, unter Einhaltung der gesetzlichen Forderungen.

Diese Aufgabe wird erfindungsgemäß dadurch gelöst, daß die hydraulisch zugespannte Radbremse durch eine Verriegelungsvorrichtung, die elektrisch betätigbar ist, entgegen der Zuspannrichtung der Bremse verriegelbar ist. Dabei erfolgt die Verriegelung der zugespannten Kolbenposition mechanisch mittels einer selbsttätigen, stufenlosen Nachstellvorrichtung mit einer Sperrvorrichtung. Die Aktivierung dieser mechanischen Verriegelung erfolgt elektromagnetisch durch eine elektrische Schaltung, die eigenständig von einem elektrischen Schalter aus betätigbar ist. Damit wird die Nutzung der Feststellbremse im regulären Betriebsbremsdruckbereich gestattet, wobei Fremdenergiequellen, die etwa eine Pumpe oder einen Speicher erforderlich machen, entfallen.

Gemäß einer vorteilhaften Ausführungsform der Erfindung ist vorgesehen, daß die Nachstellvorrichtung eine Nachstellmutter und eine Nachstellspindel mit Bewegungsgewinde aufweist, die insbesondere im Inneren des Bremskolbens angeordnet sind. Zweckmäßig wird die Reibkupplung von der Nachstellmutter und einem im Bremsgehäuse angeordneten Reibkonus gebildet.

Weitere vorteilhafte Ausführungsformen sehen vor, daß der Elektromagnet im Bremsgehäuse angeordnet ist, und daß der Anker des Elektromagneten fest mit der Nachstellmutter verbunden ist.

Als zweckmäßig erweist es sich weiterhin, wenn die Wicklung des Elektromagneten in einem zylindrischen Fortsatz des Bremsgehäusedeckels angeordnet ist und der Reibkonus am zylindrischen Fortsatz des Bremsgehäusedeckels ausgebildet ist.

Vorteilhafterweise weist die Nachstellmutter zur Positionierung zwei Axiallager auf, deren eines über eine Feder am Bremsgehäuse abgestützt ist.

Um ein Lösen der Feststellbremse durch unbeabsichtigtes Betätigen des Bremspedals zu vermeiden, sehen zweckmäßige Ausführungsformen ein elektrisches Relais vor, das bei Aktivierung des Elektromagneten so geschaltet wird, daß bei Betätigung des Bremslichtschalters der Elektromagnet geschlossen wird, oder aber daß bei Aktivierung des Elektromagneten so geschaltet wird, daß bei Betätigung des Bremslichtschalters ein SO-Ventil bestromt wird, das die Feststellbremse von der hydraulischen Druckversorgung absperrt. Eine andere Ausführungsform sieht zu diesem Zweck vor, daß ein Wechselschalter vorgesehen ist, der im eingeschalteten Zustand bei Betätigung des Bremslichtschalters den Elektromangenten/das SO-Ventil bestromt, wenn der Bremslichtschalter betätigt wird.

Eine oben genannte Sperrvorrichtung kann formschlüssig ausgeführt sein, in Form einer Schiene mit Sägezahnrastung und einer zugehörigen Sperrklinke oder reibschlüssig in Form von zwei zueinander parallel beweglichen Schienen mit keilförmigem Zwischenraum mit einem Sperrkörper in diesem keilförmigen Zwischenraum, der bei Bewegung der Schienen in Sperrichtung eine Klemmung erzeugt.

Um der gesetzlichen Forderung nach einem zweiten Betätigungsweg für die Feststellbremse nachzukommen, erfolgt die hydraulische Betätigung der Feststellbremse entweder durch Muskelkraft des Fahrers über einen vom Betriebssystem losgelösten eigenständigen, hand- oder fußbetätigbaren Bremsdruckgeber (z.B. zweites Bremspedal, Hebel) oder durch einen Fremdenergiebetätigungsmechanismus. Dabei ist für beide Betätigungsarten erforderlich, daß die Feststellbremse vom Fahrer auslösbar und dosierbar ist.

Die Betätigung der Feststellbremse mittels Fremdenergie kann unterschiedlich erfolgen und greift zweckmäßigerweise auf bereits im Bremssystem vorhandene elektrisch ansteuerbare Energiequellen zurück (z.B. Booster, Hydraulikpumpe, Plungerantrieb, Speicher mit elektrischen Ventilen). Vorteilhafterweise wirkt dabei die Fremdenergiequelle auf zwei voneinander getrennte hydraulische Bremskreise, um bei Ausfall eines Bremskreises eine Notfeststellbremsung zu ermöglichen. Sollte sowohl der Betriebsbremsdruckgeber als auch die Fremdenergiequelle über einen Bremskreis auf die Radbremsen mit Verriegelungsvorrichtung wirken, so können bei Ausfall dieses Bremskreises die ABS-/ASR-Ventile des anderen Bremskreises für eine Notfeststellfunktion zur Einsperrung der Bremsflüssigkeitsmenge genutzt werden.

Die Dosierung der Feststellbremskraft im Falle einer Fremdenergiebetätigung kann vorteilhaft über die Betätigungsdauer eines elektrischen Schalters erfolgen. Andererseits ist auch eine Dosierung über die direkte digitale oder analoge Eingabe der gewünschten Bremsdruckintensität möglich.

In einer weiteren vorteilhaften Ausführungsform besitzt die mechanische Verriegelungsvorrichtung einen Nothebel, über den mit Bordmitteln die Verriegelungsvorrichtung deaktivierbar ist. Ein solcher Nothebel steht zweckmäßigerweise mechanisch direkt mit der einseitig wirksamen Sperrvorrichtung der Radbremse in Verbindung und gestattet so eine Notentriegelung der Bremse.

Ausführungsbeispiele der Erfindung sind in der Zeichnung in sieben Figuren dargestellt und im folgenden beschrieben.

Es zeigen:
- Fig. 1: eine Seitenansicht einer dem Stand der Technik vergleichbaren Trommelbremse mit mechanischer Verriegelungsvorrichtung,
- Fig.2: eine vergrößerte Teilansicht einer mechanischen Verriegelungsvorrichtung der Trommelbremse aus Fig. 1,
- Fig. 3: eine Prinzipdarstellung einer Sperrvorrichtung mit reibschlüssiger Verriegelung,
- Fig. 4: eine kombinierte Betriebs- und Feststellbremse für Kraftfahrzeuge (Teilbelagscheibenbremse) im Schnitt,

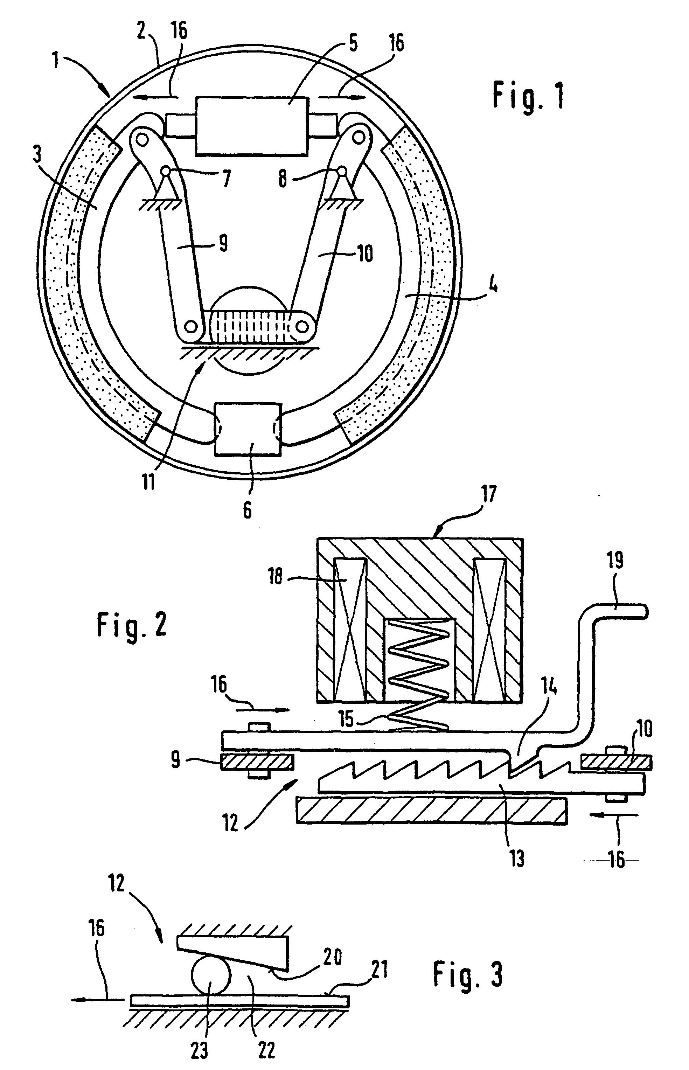

Die in den Fig. 1 und 2 dargestellte Simplex-Trommelbremse 1 verfügt über zwei in einer Bremstrommel 2 angeordnete Bremsbacken 3,4, die bei einer Bremsung von einem mit hydraulischem Druck beaufschlagten Radbremszylinder 5 gegen die Bremstrommel 2 andrückbar sind. Dabei sind die Bremsbacken 3,4 an einem Ende jeweils um eine Anlagefläche zu einem Druckstück 6 schwenkbar und an einem zweiten Ende durch den Radbremszylinder 5 aufspreizbar. An diesem zweiten Ende sind die Bremsbacken 3,4 jeweils schwenkbar an einen um einen festen Drehpunkt 7,8 gelagerten Hebel 9,10 angebunden, der seinerseits schwenkbar an eine mechanische Verriegelungsvorrichtung 11 angelenkt ist. Die mechanische Verriegelungsvorrichtung 11 ist nach Fig. 2 als einseitig wirksame mechanische Sperrvorrichtung 12 ausgeführt, die aus einer Schiene mit Sägezahnrastung 13 und einer zugehörigen Sperrklinke 14 besteht. Durch die Verbindung von Schiene 13 und Sperrklinke 14 mit den Hebeln 9,10 wird über eine geeignete Übersetzung die Zustellbewegung der Bremsbacken 3,4 auf die Sperrvorrichtung 12 übertragen. Die von einer ortsfest abgestützten Feder 15 vorgespannte Sperrklinke 14 greift in die Sägezahnrastung der Schiene 13 ein und läßt eine Relativbewegung von Schiene 13 und Sperrklinke 14 nur in Zuspannrichtung 16 der Bremsbacken 3,4 zu. In Gegenrichtung ist die Sperrvorrichtung 12 verriegelt. Dadurch wird das Lösen der hydraulisch zugespannten Trommelbremse 1 verhindert. Weiterhin ist die Sperrklinke 14 der Sperrvorrichtung 12 über eine elektrische Einheit 17 mit Wicklung 18 elektrisch ansteuerbar. Bei stromdurchflossener Wicklung 18 wird die Sperrklinke 14 in Fig. 2 nach oben bewegt und außer Eingriff zur Sägezahnrastung der Schiene 13 gebracht, was zur Deaktivierung der Sperrvorrichtung 12 führt. Die mechanische Sperrvorrichtung 12 wird bei jeder Betriebsbremsung deaktiviert und bleibt dies für einen Zeitraum t nach der Betätigung des Bremspedals, um sicherzustellen, daß die Radbremsen mit mechanischem Verriegelungsmechanismus vollständig gelöst haben. Dies läßt sich in einfacher Weise durch die Ansteuerung der elektrischen Einheit 17 über die Stellung des Bremslichtschalters realisieren. Bei Feststellbremsung bleibt die Sperrvorrichtung 12 aktiviert und verriegelt die Radbremse 1 im hydraulisch zugespannten Zustand. Die Feststellbremse wird gelöst, wenn die mechanische Sperrvorrichtung 12 deaktiviert wird und die hydraulische Betätigung der Bremse auf einen etwas höheren Wert als bei der Feststellbremsauslösung erfolgt. Damit läßt sich die Verriegelung unter geringem Kraftaufwand an der Sperrvorrichtung 12 aufheben.

Zusätzlich ist die Sperrvorrichtung 12 mit einem Nothebel 19 ausgerüstet, der bei Störung der elektrischen Energieversorgung unter Einsatz von Bordmitteln Schiene 13 und Sperrklinke 14 außer Eingriff bringt und damit die Verriegelung löst. Ein solcher Nothebel 19 zur Notentriegelung kann sowohl mechanisch als auch elektrisch betätigt werden, wobei eine elektrische Betätigung eine zweite elektrische Energiequelle erfordert.

Um der gesetzlichen Forderung nach einem zweiten Betätigungsweg der Feststellbremse zu entsprechen, muß die hydraulische Zuspannung der Feststellbremse über einen weiteren, entweder vom Fahrer durch Muskelkraft hand- oder fußbetätigbaren Bremsdruckgeber (z.B. zweites Bremspedal, Hebel) oder einen vom Fahrer auslösbaren und dosierbaren Fremdenergiebetätigungsmechanismus erfolgen.

Die Information darüber, daß die Feststellbremse aktiviert werden soll, teilt der Fahrer über die Betätigung eines elektrischen Schalters oder das Ausschalten der Zündung einer elektronischen Schaltung mit, die die Stromzufuhr zur elektrischen Einheit 17 der Sperrvorrichtung 12 steuert. Die Dosierung der Feststellbremse erfolgt bei Muskelkraftbetätigung über die Änderung der Betätigungskraft am zweiten Bremsdruckgeber und bei Betätigung durch einen Schalter über die Betätigungsdauer (Integration über der Zeit) oder die direkte digitale oder analoge Eingabe der gewünschten Bremsdruckintensität zur Feststellbremsung.

Analog zur Ausführung einer formschlüssigen, mechanischen Sperrvorrichtung 12 mit einer einseitig wirksamen Rastung ist auch eine reibschlüssige mechanische Sperrvorrichtung nach Fig. 3 denkbar. Diese verfügt über zwei sich gegenüberliegende Flächen 20,21 mit einem keilförmigen Zwischenraum 22, in dem ein zylindrisches Sperrelement 23 angeordnet ist, daß eine Parallelverschiebung der beiden Flächen 20,21 zueinander nur in Zuspannrichtung 16 der Bremse zuläßt. In Gegenrichtung wird das zylindrische Sperrelement 23 in den keilförmig zulaufenden Zwischenraum 22 bewegt und führt zu einer reibschlüssigen Klemmung der Sperrvorrichtung 12.

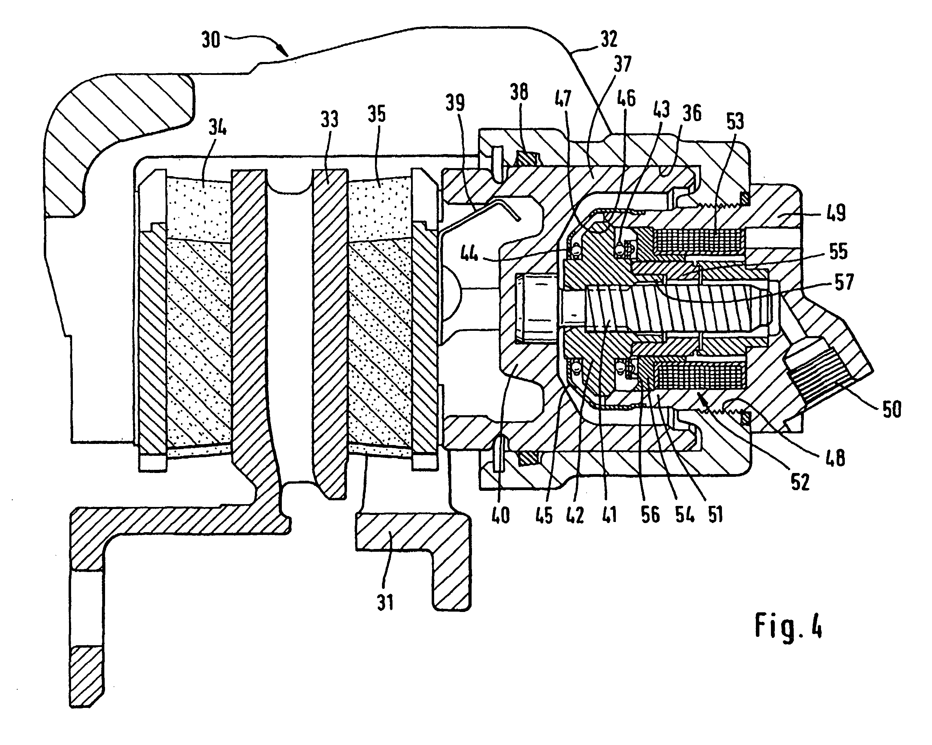

Die in der Fig. 4 dargestellte kombinierte Betriebs- und Feststellbremse 30 weist einen Bremsträger 31 und ein Bremsgehäuse 32 auf, welches den äußeren Rand einer Bremsscheibe 33 und zwei zu beiden Seiten der Bremsscheibe 33 angeordnete Bremsbeläge 34,35 umgreift. Das Bremsgehäuse 32 bildet auf seiner Innenseite einen Bremszylinder 36, der einen Bremskolben 37 axial verschiebbar aufnimmt. In den zwischen Bremszylinder 36 und Bremskolben 37 gebildeten Raum kann Bremsflüssigkeit zugeführt werden, so daß sich ein Bremsdruck aufbaut, der den Bremskolben 37 axial zur Bremsscheibe. 33 hin verschiebt. Dadurch wird der Bremsbelag 35 gegen die Bremsscheibe 33 gedrückt, wobei als Reaktion das Bremsgehäuse 32 sich in der entgegengesetzten Richtung verschiebt und dadurch auch den Bremsbelag 34 gegen die Bremsscheibe 33 drückt.

Zwischen dem Bremskolben 37 und dem Bremszylinder 36 ist ein Dichtring 38 vorgesehen, der nach erfolgter Bremsung den Bremskolben 37 wieder etwas zurückzieht(Roll-Back-Dichtung) und dadurch den über die Belaghaltefeder 39 mit dem Bremskolben 37 verbundenen Bremsbelag 35 mitnimmt. Die Nachstellvorrichtung weist eine mit dem Boden 40 des Bremskolbens 37 fest verbundene Gewindespindel 41 auf, die sich axial von der Bremsscheibe 33 wegerstreckt und die eine Nachstellmutter 42 trägt. Zu beiden Seiten der Nachstellmutter 42 sind Axiallager 43, 44 vorgesehen, die auf entsprechenden Absätzen der Nachstellmutter 42 angeordnet sind. Zur Bremsscheibe 33 hin wird die Nachstellmutter 42 durch ein mit dem Bremsgehäuse 32 fest verbundenes Haltelement 45, welches die Nachstellmutter 42 und das Axiallager 44 außen umgreift, gehalten.

Eine Konuskupplung wird von einer außen an der Nachstellmutter 42 gebildeten konischen Reibfläche 46 und einer gehäusefesten Reibfläche 47 gebildet.

Das Bremsgehäuse 32 weist eine mit Gewinde versehene Öffnung 48 auf, die mittels eines eingeschraubten Gehäusedeckels 49 verschlossen ist. Im Gehäusedeckel 49 ist die Zuführöffnung 50 für die Bremsflüssigkeit vorgesehen. Ferner weist der Gehäusedeckel 49 einen zylindrischen Fortsatz 51 auf, der sich in das Innere des Bremszylinders 36 erstreckt. Dieser zylindrische Fortsatz 51 bildet an seinem vorderen Ende die gehäusefeste Reibfläche. An seiner Außenseite ist das Haltelement 45 befestigt.

Im Inneren des zylindrischen Fortsatzes 51 ist auch der Elektromagnet 52 angeordnet. Die Wicklung 53 sitzt dabei zwischen der Bodenfläche des Gehäusesdeckels 49 und der Ankerführung 54 und ist dabei gegen eine axiale Bewegung fixiert. Der Anker 55 des Elektromagneten 52 ist fest mit einem zylindrischen Fortsatz 57 der Nachstellmutter 42 verbünden.

Nachfolgend ist die Funktionsweise der kombinierten Betriebs- und Feststellbremse beschrieben. Im Betätigungsmodus als Betriebsbremse wird der Bremskolben 37 durch den hydraulischen Druck wie bei jeder Standardscheibenbremse gegen die Bremsbeläge 34,35 gedrückt. Dabei führt die Nachstellmutter 42 bedingt durch Verschiebung der Nachstellspindel 41 eine Drehbewegung aus. Die Positionierung der Nachstellmutter 42 wird durch die beiden Axialkugellager 43,44 vorgenommen. Das kolbenseitige, beim Zuspannen belastete Lager 44 wird direkt am Gehäuse abgestützt und das hintere beim Bremslösen belastete Lager 43 wird über eine Druckfeder 56 am Gehäuse abgestützt.

Im Betätigungsmodus als Feststellbremse wird wie im Betätigungsmodus als Betriebsbremse der Bremskolben 37 durch den hydraulischen Druck gegen die Bremsbeläge 34,35 gedrückt und die Zuspannkraft erzeugt. Nach Erreichen der benötigten Zuspannkraft betätigt der Fahrer einen Schalter, wodurch der Elektromagnet 52 aktiviert wird. Der Elektromagnet 52 zieht die Nachstellmutter 42 gegen die Druckfeder 56 des hinteren Axiallagers 43 an die gehäusefeste Reibfläche der Konuskupplung. Damit ist die Reibkupplung aktiviert. Eine Reduzierung des hydraulischen Druckes führt zunächst zu einem Ausgleichen des mechanischen Spieles zwischen Nachstellspindel und Nachstellmutter, wodurch ein geringer Vorspannverlust entsteht. Danach ist eine axiale Verschiebung des Bremskolbens 37 bei weiterer Reduktion des hydraulischen Druckes nicht mehr möglich. Eine axiale Verschiebung des Bremskolbens 37 führt über die Nachstellspindel 41 immer zu einer Drehbewegung der Nachstellmutter 42. Diese Drehbewegung wird aber durch die geschlossene Konuskupplung verändert. Der Bremskolben 37 stützt sich über die Nachstellspindel 41 und die Nachstellmutter 42 am Bremsgehäuse ab, wodurch die Feststellposition verriegelt wird.

Zum Lösen der Feststellbremse wird ein der Zuspannkraft adäquater hydraulischer Druck aufgebracht. Die Konuskupplung wird dadurch entlastet und die vorgespannte Druckfeder 56 des hinteren Axiallagers 43 verschiebt die Nachstellmutter 42 nach vorne. Damit wird die Reibkupplung geöffnet. Da die Federkraft größer ist als die Reibungskräfte im Bewegungsgewinde, kann der Bremskolben 37 bei sich drehender Nachstellmutter 42 in die ursprüngliche, entlastete Ruheposition zurückkehren. Eine ordnungsgemäße Luftspielfunktion ist durch die Verwendung kleiner Drücke gegeben. Die Druckfeder 56 hält die Nachstellmutter 42 in dieser ausgerückten Position und der Betätigungsmodus als Betriebsbremse ist eingeschaltet bis zum nächsten Aktivieren des Elektromagneten.

Zum Schutz gegen Lösen der Feststellbremse durch unbeabsichtigtes Betätigen des Bremspedales gibt es verschiedene zweckmäßige Lösungen. Bei einer ersten Ausführungsform wird nach Aktivieren des Elektromagneten ein elektrisches Relais so geschaltet, daß bei Betätigen des Bremslichtschalters der Elektromagnet bestromt wird. Dadurch bleibt die Reibungskupplung immer geschlossen. Durch Übertreten des adäquaten hydraulischen Druckes wird die Zuspannkraft der Feststellbremse erhöht. Die geschlossene Reibkupplung verhindert allerdings ein Absinken der Zuspannkraft bei Reduzierung des hydraulischen Druckes.

Bei einer anderen Variante wird bei Aktivieren des Elektromagneten ein elektrisches Relais so geschaltet, daß bei Betätigung des Bremslichtschalters ein SO-Ventil bestromt wird. Dieses Ventil sperrt im geschlossenen Zustand die Feststellbremse von der hydraulischen Druckversorgung ab.

Bei einer weiteren Ausführungsform können die zuvor beschriebenen elektrischen Relais durch einen Wechselschalter ersetzt werden, der im eingeschalteten Zustand immer dann den Magneten/das SO-Ventil bestromt, wenn der Bremslichtschalter betätigt wird. Dadurch kann im Betriebsmodus als Feststellbremse bei Betätigung des Bremspedals die Zuspannkraft nur erhöht aber nicht verringert werden.

Neben den hier erläuterten Ausführungsbeispielen sind natürlich noch weitere kombinierte Betriebs- und Feststellbremsanlagen möglich, die elektrisch fremdangesteuerte Fremdenergiequellen zur Feststellbremsung verwenden.

### Bezugszeichenliste

- 1: Simplex-Trommelbremse
- 2: Bremstrommel
- 3,4: Bremsbacken
- 5: Radbremszylinder
- 6: Druckstück
- 7,8: Fester Drehpunkt
- 9,10: Hebel
- 11: Verriegelungsvorrichtung (VV)
- 12: Sperreinrichtung
- 13: Schiene mit Sägezahnrastung
- 14: Sperrklinke
- 15: Feder
- 16: Zuspannrichtung
- 17: Elektrische Einheit
- 18: Wicklung
- 19: Nothebel
- 20,21: Flächen
- 22: Keilförmiger Zwischenraum
- 23: Zylindrisches Sperrelement
- 30: Kombinierte Betriebs- und Feststellbremse
- 31: Bremsträger
- 32: Bremsgehäuse
- 33: Bremsscheibe
- 34: Bremsbelag
- 35: Bremsbelag
- 36: Bremszylinder
- 37: Bremskolben
- 38: Dichtring
- 39: Belaghaltefeder
- 40: Boden
- 41: Gewindespindel
- 42: Nachstellmutter
- 43: Axiallager
- 44: Axiallager
- 45: Halteelement
- 46: Reibfläche (Mutter)
- 47: Reibfläche (Gehäuse)
- 48: Öffnung
- 49: Gehäusedeckel
- 50: Zuführöffnung
- 51: Zylindrischer Fortsatz
- 52: Elektromagnet
- 53: Wicklung
- 54: Ankerführung
- 55: Anker
- 56: Druckfeder
- 57: Zylindrischer Fortsatz der Nachstellmutter
- 60: Kombinierte Betriebs- und Feststellbremsanlage
- 61,62: Hydraulische Bremskreise
- 63,64: Vorderrad-Scheibenbremse
- 65,66: Hinterrad-Trommelbremse
- 67: Betätigungseinheit
- 70: Fremd ansteuerbare Hydraulikpumpe
- 71: Kombinierte Trommelbremse
- 72: SO-Ventil
- 80: Vorderachsbremskreis
- 81: Hinterachsbremskreis
- 82,83: Vorderrad-Scheibenbremse
- 84,85: Hinterrad-Trommelbremse
- 86: Plunger
- 87: SO-Ventil
- 88: SO-Ventil ohne Rückschlagventil

## Patentansprüche

1. Kombinierte Betriebs- und Feststellbremsanlage (60), insbesondere für Kraftfahrzeuge, mit mindestens einer hydraulisch zuspannbaren, kombinierten Betriebs- und Feststellbremse (1, 30), die im hydraulisch zugespannten Zustand mechanisch verriegelbar ist, mit einer Verriegelungsvorrichtung, die direkt die die Radbremse zuspannenden Bauteile mechanisch entgegen der Zuspannrichtung (16) der Bremse zu verriegeln vermag und elektrisch betätigbar ist, **dadurch gekennzeichnet, daß** die kombinierte Betriebs- und Feststellbremse (30) eine Nachstellvorrichtung mit einer mechanischen Sperrvorrichtung, insbesondere eine Reibkupplung (46, 47), besitzt und daß ein Elektromagnet (52) vorgesehen ist, mit dem die Sperrvorrichtung (46, 47) der Nachstellvorrichtung betätigbar ist.

2. Kombinierte Betriebs- und Feststellbremsanlage nach Anspruch 1, **dadurch gekennzeichnet, daß** die Nachstellvorrichtung eine Nachstellspindel (41) und eine Nachstellmutter (42) mit Bewegungsgewinde aufweist, die insbesondere im Inneren des Bremskolbens (37) angeordnet sind.

3. Kombinierte Betriebs- und Feststellbremsanlage nach Anspruch 2, **dadurch gekennzeichnet, daß** die Reibkupplung von der Nachstellmutter (42) und einem im Bremsgehäuse fest angeordneten Reibkonus (47) gebildet ist.

4. Kombinierte Betriebs- und Feststellbremsanlage nach einem der vorhergehenden Ansprüche, **dadurch gekennzeichnet, daß** der Elektromagnet (52) im Bremsgehäuse angeordnet ist.

5. Kombinierte Betriebs- und Feststellbremsanlage nach Anspruch 2, **dadurch gekennzeichnet, daß** der Anker (55) des Elektromagneten (52) fest mit der Nachstellmutter (42) verbunden ist.

6. Kombinierte Betriebs- und Feststellbremsanlage nach einem der vorhergehenden Ansprüche, **dadurch gekennzeichnet, daß** die Wicklung (53) des Elektromagneten (52) in einem zylindrischen Fortsatz (51) eines Bremsgehäusedeckels (49) angeordnet ist.

7. Kombinierte Betriebs- und Feststellbremsanlage nach Anspruch 6, **dadurch gekennzeichnet, daß** der Reibkonus (47) an einem zylindrischen Fortsatz (51) des Bremsgehäusedeckels (49) ausgebildet ist.

8. Kombinierte Betriebs- und Feststellbremsanlage nach einem der vorhergehenden Ansprüche, **dadurch gekennzeichnet, daß** die Nachstellmutter (42) die Positionierung zweier Axiallager (43, 44) aufweist, deren eines über eine Druckfeder (56) am Bremsgehäuse (32) abgestützt ist.

9. Kombinierte Betriebs- und Feststellbremsanlage nach einem der vorhergehenden Ansprüche, **dadurch gekennzeichnet, daß** ein elektrisches Relais vorgesehen ist, daß bei Aktivierung des Elektromagneten so geschaltet wird, daß bei Betätigung des Bremslichtschalters der Elektromagnet (52) geschlossen wird.

10. Kombinierte Betriebs- und Feststellbremsanlage nach einem der Ansprüche 1 bis 8, **dadurch gekennzeichnet, daß** ein elektrisches Relais vorgesehen ist, daß bei Aktivierung des Elektromagneten (52) so geschaltet wird, daß bei Betätigung des Bremslichtschalters ein SO-Ventil bestromt wird, daß die Feststellbremse von der hydraulischen Druckvorrichtung absperrt.

11. Kombinierte Betriebs- und Feststellbremsanlage nach einem der Ansprüche 1 bis 7, **dadurch gekennzeichnet, daß** ein Wechselschalter vorgesehen ist, der im eingeschalteten Zustand bei Betätigung des Bremslichtschalters den Elektromagneten (52) bzw. das SO-Ventil bestromt, wenn der Bremslichtschalter eingeschaltet ist.

## Claims

1. Combined service and parking brake system (60), in particular for automotive vehicles, which includes at least one hydraulically actuatable, combined service and parking brake (1, 30) which is mechanically lockable in the hydraulically clamped condition, with a locking device that is able to directly mechanically lock the components which clamp the wheel brake in opposition to the clamping direction (16) of the brake and is electrically operable,
**characterizedin that** the combined service and parking brake (30) has an adjusting device with a mechanical catch mechanism, in particular a friction clutch (46, 47), and in that an electromagnet (52) is provided by which the catch mechanism (46, 47) of the adjusting device is operable.

2. Combined service and parking brake system as claimed in claim 1,
**characterizedin that** the adjusting device includes an adjusting spindle (41) and an adjusting nut (42) with a motional thread which are arranged especially in the interior of the brake piston (37).

3. Combined service and parking brake system as claimed in claim 2,
**characterizedin that** the friction clutch is provided by the adjusting nut (42) and a friction cone (47) fixed in the brake housing.

4. Combined service and parking brake system as claimed in any one of the preceding claims,
**characterized in that** the electromagnet (52) is accommodated in the brake housing.

5. Combined service and parking brake system as claimed in claim 2,
**characterized in that** the armature (55) of the electromagnet (52) is rigidly coupled to the adjusting nut (42).

6. Combined service and parking brake system as claimed in any one of the preceding claims,
**characterized in that** the winding (53) of the electromagnet (52) is arranged in a cylindrical extension (51) of the brake housing cover (49).

7. Combined service and parking brake system as claimed in claim 6,
**characterized in that** the friction cone (47) is provided on a cylindrical extension (51) of the brake housing cover (49).

8. Combined service and parking brake system as claimed in any one of the preceding claims,
**characterized in that** the adjusting nut (42) includes the positioning of two axial bearings (43, 44), one of the bearings being supported on the brake housing (32) by way of a compression spring (56).

9. Combined service and parking brake system as claimed in any one of the preceding claims,
**characterized in that** there is provision of an electric relay which, upon activation of the electromagnet, triggers closing of the electromagnet (52) when the brake light switch is operated.

10. Combined service and parking brake system as claimed in any one of claims 1 to 8,
**characterized in that** there is provision of an electric relay which, upon activation of the electromagnet (52), triggers energization of a normally-open valve when the brake light switch is operated, said valve isolating the parking brake from the hydraulic pressure device.

11. Combined service and parking brake system as claimed in any one of claims 1 to 7,
**characterized in that** there is provision of an alternating switch which, in its on-condition when the brake light switch is operated, energizes the electromagnet (52) or the normally-open valve when the brake light switch is switched on.

## Revendications

1. Dispositif de frein de service et de stationnement combiné (60), notamment pour véhicule automobile, comprenant au moins un frein de service et de stationnement combiné (1, 30) à serrage hydraulique, qui peut être verrouillé mécaniquement dans l'état serré hydrauliquement, et un dispositif de verrouillage qui peut verrouiller directement les pièces serrant le frein de roue, d'une manière mécanique, dans le sens opposé au sens de serrage (16) du frein et qui peut être actionné électriquement, **caractérisé en ce que** le frein de service et de stationnement combiné (30) comprend un dispositif de rattrapage de jeu comportant un dispositif de blocage mécanique, notamment un accouplement à friction (46, 47), et **en ce qu'**il est prévu un électroaimant (52) au moyen duquel le dispositif de blocage (46, 47) du dispositif de rattrapage de jeu peut être actionné.

2. Dispositif de freinage de service et de stationnement combiné suivant la revendication 1, **caractérisé en ce que** le dispositif de rattrapage de jeu comprend une tige filetée de rattrapage de jeu (41) et un écrou de rattrapage de jeu (42), comportant des filetages de déplacement, qui sont disposés notamment à l'intérieur du piston de frein (37).

3. Dispositif de freinage de service et de stationnement combiné suivant la revendication 2, **caractérisé en ce que** l'accouplement à friction est formé de l'écrou de rattrapage de jeu (42) et d'un cône de friction (47) disposé à demeure dans le boîtier de frein.

4. Dispositif de freinage de service et de stationnement combiné suivant l'une quelconque des revendications précédentes, **caractérisé en ce que** l'électroaimant (52) est disposé dans le boîtier de frein.

5. Dispositif de freinage de service et de stationnement combiné suivant la revendication 2, **caractérisé en ce que** l'armature mobile (55) de l'électroaimant (52) est solidaire à demeure de l'écrou de rattrapage de jeu (42).

6. Dispositif de freinage de service et de stationnement combiné suivant l'une quelconque des revendications précédentes, **caractérisé en ce que** l'enroulement (53) de l'électroaimant (52) est disposé dans un prolongement cylindrique (51) d'un couvercle de boîtier de frein (49).

7. Dispositif de freinage de service et de stationnement combiné suivant la revendication 6, **caractérisé en ce que** le cône de friction (47) est réalisé sur un prolongement cylindrique (51) du couvercle de boîtier de frein (49).

8. Dispositif de freinage de service et de stationnement combiné suivant l'une quelconque des revendications précédentes, **caractérisé en ce que** l'écrou de rattrapage de jeu (42) comporte le positionnement de deux butées axiales (43, 44) dont l'un est en appui sur le boîtier de frein (32) par l'intermédiaire d'un ressort de compression (56).

9. Dispositif de freinage de service et de stationnement combiné suivant l'une quelconque des revendications précédentes, **caractérisé en ce qu'**il est prévu un relais électrique qui, lors d'une activation de l'électroaimant, est commuté d'une manière telle que l'électroaimant (52) est fermé lors d'un actionnement de l'interrupteur des feux-stop.

10. Dispositif de frein de service et de stationnement combiné suivant l'une quelconque des revendications précédentes, **caractérisé en ce qu'**il est prévu un relais électrique qui, lors d'une activation de l'électroaimant (52), est commuté d'une manière telle que, lors d'un actionnement de l'interrupteur de feux-stop, un courant parcourt une valve ouverte en l'absence de courant qui coupe la liaison du frein de stationnement au dispositif de pression hydraulique.

11. Dispositif de freinage de service et de stationnement combiné suivant l'une quelconque des revendications 1 à 7, **caractérisé en ce qu'**il est prévu un commutateur de sélection qui, à l'état mis en circuit et lors d'un actionnement de l'interrupteur de feux-stop, envoie un courant dans l'électroaimant (52) ou la valve ouverte en l'absence de courant lorsque l'interrupteur de feux-stop est mis en circuit.
